# EUROPEAN PATENT APPLICATION

(11) **EP 1 821 029 A2**
(43) Date of publication of application: **22.08.2007**
(21) Application number: 07075083.1
(22) Date of filing: 01.02.2007
(51) Int. Cl.: F16M 11/24

(54) **Stand and display apparatus having the same**

(30) Priority: 21.02.2006 KR 20060016724
(71) Applicant: Samsung Electronics Co., Ltd., Suwon-si Gyeonggi-do (KR)
(72) Inventor: Kim, Sun jin, Suwon-si Gyeonggi-do (KR); Oh, Seung-hoon, Yongin-si Gyeonggi-do (KR); Ha, Sang-kyeong, Jugong 1-danji, Suwon-si Gyeonggi-do (KR)
(74) Representative: Hylarides, Paul Jacques

(57) **Abstract**

A display apparatus (1) includes a display main body (10), a base (20), and a stand having a lifting unit (60) provided between the display main body (10) and the base (20) and allowing the display main body (10) to move up and down relative to the base (20), a pivoting unit provided between the display main body (10) and the lifting unit (60) and allowing the display main body (10) to pivot relative to the lifting unit (60), and a rotation-transmission unit to transmit a pivoting operation of the pivoting unit to the lifting unit (60) to interlock the pivoting operation of the pivoting unit with a moving operation of the lifting unit (60).

## Description

### CROSS-REFERENCE TO RELATED APPLICATIONS

This application claims priority under 35 U.S.C. § 119(a) from Korean Patent Application No. 2006-0016724, filed on February 21, 2006, in the Korean Intellectual Property Office, the disclosure of which is incorporated herein by reference.

### BACKGROUND OF THE INVENTION

### Field of the Invention

The present invention relates to a stand and a display apparatus having the same, and more particularly, to a stand and a display apparatus having the same, which have an improved operation structure of a display main body relative to a base.

### Description of the Related Art

In general, a conventional display apparatus includes a display main body on which an image is displayed, and a stand having a base seated on an installation surface such as a table and supporting the display main body.

Recently, a thin and flat display panel such as a liquid crystal display (LCD) or a plasma display panel (PDP) has been employed as the display main body.

The conventional display apparatus generally includes the base seated on the installation surface such as the table, the display main body supported by the base and displaying an image thereon, and a tilting hinge provided between the base and the display main body and allowing the display main body to be tilted relative to the base. Here, the tilting hinge includes a pair of brackets provided in a rear side of the display main body, and a pair of hinge shafts having one end coupled to each bracket and the other end coupled to a top of the base. Further, the hinge shaft has an axial line in left and right directions when a side of the display main body displaying an image is regarded as a front side thereof. Further, the hinge shaft is rotatably coupled with at least one of the bracket and the top of the base. Thus, the display main body can be tilted with respect to the hinge shaft of the left and right directions.

However, the conventional display apparatus has no lifting function that allows the display main body to move up and down relative to the base, so that it is inconvenient for a user.

Further, if the display main body provided in the conventional display apparatus may be swiveled relative to the base, i.e., rotate with respect to an axial line in up and down directions transverse to a surface of the base, and may pivot relative to the base, i.e., rotate with respect to an axial line in front and back directions of the display main body, it will be convenient for a user to use. Moreover, the pivoted state may not be interlocked with the lifting function while pivoting the display main body, and damage occurs due to a collision between the display main body and the installation surface.

### SUMMARY OF THE INVENTION

The present general inventive concept provides a stand usable in a display apparatus and a display apparatus having the same, in which a display main body can be readily lifted up and down relative to a base, and a lifting operation is interlocked with a pivoting operation.

The present general inventive concept provides a display apparatus having a stand, in which a display main body can rotate in various directions relative to a base.

Additional aspects and/or advantages of the present general inventive concept will be set forth in part in the description which follows and, in part, will be obvious from the description, or may be learned by practice of the present general inventive concept.

The foregoing and/or other aspects of the present general inventive concept may be achieved by providing a display apparatus comprising a display main body, a base, a lifting unit provided between the display main body and the base to allow the display main body to move up and down relative to the base, a pivoting unit provided between the display main body and the lifting unit to allow the display main body to pivot relative to the lifting unit, and a rotation-transmission unit to transmit a pivoting operation of the pivoting unit to the lifting unit to interlock the pivoting operation of the pivoting unit with a moving operation of the lifting unit.

The rotation-transmission unit may control the lifting unit to limit the moving down operation of the display main body when the pivoting unit pivots at a predetermined angle relative to the lifting unit.

The rotation-transmission unit may control the pivoting unit to pivot within a predetermined limited angle relative to the lifting unit when the display main body is placed at a predetermined distance from the base.

The rotation-transmission unit may be coupled to the lifting unit and may include a lever having a first end contacting the pivoting unit and a second end guided to move up and down by the lifting unit.

The rotation-transmission unit may further include a lever elastic member to elastically press the lever toward the pivoting unit and maintain contact between the lever and the pivoting unit.

The lifting unit may include a guide frame provided on the base in a lifting direction, and a lifting member coupled to the pivoting unit to slide relative to the guide frame.

The lever may include a lever rotating shaft rotatably coupled to the guide frame, a pivoting contact surface provided in a first side of the lever to contact the pivoting unit, and a guiding projection provided in a second side of the lever and guided to move up and down by the guide frame.

The pivoting unit may include a pivoting shaft having a non-circular pivoting surface at an end thereof to contact the pivoting contact surface of the lever.

The rotation-transmission unit may further include a lever moving slot formed in the guide frame to guide the guiding projection to slide in the lifting direction, and divided into at least one moving lock region to lock the moving operation of the lifting unit when the pivoting unit pivots and a moving free region to communicate with the moving lock region and to form a lifting axial line spaced apart at a predetermined distance from the lifting axial line of the moving lock region.

The lifting member may include a reinforcing member coupled to the lifting member to enhance the strength of the lifting member, and the lever rotating shaft is coupled to the reinforcing member.

The display apparatus may further include an oil groove formed in a surface of at least one of the guide frame and the lifting member where the lifting member is in contact with the guide member.

The display apparatus may further includes at least one elastic member provided between the guide frame and the lifting member to elastically press the lifting member upward relative to the guide frame.

The elastic member may include a spiral spring having a first end coupled to the surface of the guide frame and a second end wound on a spring shaft, and the lifting member may include a shaft coupling part coupled to the spring shaft.

The display apparatus may further include a shaft supporter provided between the spring shaft and the spiral spring and having a shaft accommodating part to rotatably accommodate and support the spring shaft, and a friction member provided between the shaft supporter and the spring shaft to generate a rotational friction in the spring shaft.

The lifting unit may include a stopper to couple the guide frame with the lifting member and to maintain a coupling state between the lifting member and the guide frame.

The lifting unit may include a lifting limiter to limit a movable distance of the lifting member relative to the guide frame, and the lifting limiter may include a lifting slot formed in the guide frame along the lifting direction and a lifting projection having a first end coupled to the lifting member and a second end inserted in and limited by the lifting slot.

The display apparatus may further include a tilting unit that is provided between the display main body and the lifting unit to allow the display main body to tilt relative to the base, and comprises a first tilting bracket coupled to the lifting unit, a second tilting bracket coupled to the display main body, and a tilting shaft provided between the first tilting bracket and the second tilting bracket to allow the second tilting bracket to be tilted relative to the first tilting bracket.

The pivoting unit may include a pivoting shaft coupled to the tilting unit, and a pivoting bracket having a first end coupled to the display main body and a second end coupled to the pivoting shaft.

The pivoting unit may include a pivoting limiter to limit pivoting of the pivoting bracket relative to the tilting unit.

The foregoing and/or other aspects of the present general inventive concept may also be achieved by providing a stand with a base to support a display main body of a display apparatus, on which an image is displayed, relative to an installation surface, the stand including: a lifting unit coupled to the base to move up and down relative the base, a pivoting unit coupled to the lifting unit to allow the display main body to pivot relative to the lifting unit, and a rotation-transmission unit to transmit a pivoting operation of the pivoting unit to the lifting unit to interlock the pivoting operation of the pivoting unit with a moving operation of the lifting unit.

The rotation-transmission unit may control the lifting unit to limit the moving down operation of the display main body when the pivoting unit pivots at a predetermined angle relative to the lifting unit.

The rotation-transmission unit may control the pivoting unit to pivot within a predetermined limited angle relative to the lifting unit when the display main body is placed at a predetermined distance from the base.

The rotation-transmission unit may be coupled to the lifting unit and may include a lever having a first end to contact the pivoting unit and a second end guided to move up and down by the lifting unit.

The rotation-transmission unit may further include a lever elastic member to elastically press the lever toward the pivoting unit and maintain contact between the lever and the pivoting unit.

The lifting unit may include: a guide frame provided on the base in a lifting direction, and a lifting member coupled to the pivoting unit to slide relative to the guide frame.

The lever may include: a lever rotating shaft rotatably coupled to the guide frame, a pivoting contact surface provided in one side of the lever to contact the pivoting unit, and a guiding projection provided in the other side of the lever and guided to move up and down by the guide frame.

The pivoting unit may include a pivoting shaft having a non-circular pivoting surface at an end thereof to contact the pivoting contact surface of the lever.

The rotation-transmission unit may further include a lever moving slot formed in the guide frame to guide the guiding projection to slide in the lifting direction, and divided into at least one moving lock region to lock the moving operation of the lifting unit when the pivoting unit pivots and a moving free region to communicate with the moving lock region and to form a lifting axial line spaced apart at a predetermined distance from the lifting axial line of the moving lock region.

The lifting member may include a reinforcing member coupled to the lifting member to enhance the strength of the lifting member, and the lever rotating shaft may be coupled to the reinforcing member.

The stand may further include an oil groove formed in a surface of at least one of the guide frame and the lifting member where the lifting member is contacted with the guide member.

The stand may further include at least one elastic member provided between the guide frame and the lifting member to elastically press the lifting member upward relative to the guide frame.

The lifting unit may include a stopper to couple the guide frame with the lifting member and to maintain a coupling state between the lifting member and the guide frame.

The lifting unit may include a lifting limiter to limit a movable distance of the lifting member relative to the guide frame, and the lifting limiter may include a lifting slot formed in the guide frame along the lifting direction and a lifting projection having a first end coupled to the lifting member and a second end inserted in and limited by the lifting slot.

The stand may further include a tilting unit that is provided between the display main body and the lifting unit to allow the display main body to tilt relative to the base, and comprises a first tilting bracket coupled to the lifting unit, a second tilting bracket coupled to the display main body, and a tilting shaft provided between the first tilting bracket and the second tilting bracket to allow the second tilting bracket to be tilted relative to the first tilting bracket.

The pivoting unit may include: a pivoting shaft coupled to the tilting unit, and a pivoting bracket having a first end coupled to the display main body and a second end coupled to the pivoting shaft.

The foregoing and/or other aspects of the present general inventive concept may also be achieved by providing a stand usable in a display apparatus, including a lifting unit having a guide frame coupled to an external base, and a lifting member movably coupled to a pivoting bracket of an external display main body and disposed to move in a lifting direction with respect to the guide frame, a pivoting unit having a first end coupled to the pivoting bracket of the display main body, and a second end extended from the first end to rotate in a pivoting direction with respect to the lifting unit, and a rotation-transmission unit having a lever rotatably coupled to the lifting member, the lever having a guiding projection guided by the guide frame such that the lifting member moves in the lifting direction and a pivoting contact surface to be in contact with the second end of the pivoting unit to bias the guiding projection in a lock position in the lifting direction.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG. 1 is a perspective view illustrating a display apparatus according to an embodiment of the present general inventive concept;
FIG. 2 is an exploded perspective view illustrating the display apparatus of FIG. 1;
FIG. 3 is an exploded perspective view illustrating a tilting unit provided in the display apparatus of FIG. 2;
FIG. 4 is an exploded perspective view illustrating a pivoting unit provided in the display apparatus of FIG. 2;
FIG. 5 is an exploded perspective view illustrating a lifting unit and a rotation-transmission unit provided in the display apparatus of FIG. 2;
FIG. 6 is an exploded perspective view illustrating a swiveling unit provided in the display apparatus of FIG. 2; and
FIGS. 7 through 13 illustrate an operating method of the display apparatus of FIG. 1 according to an embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

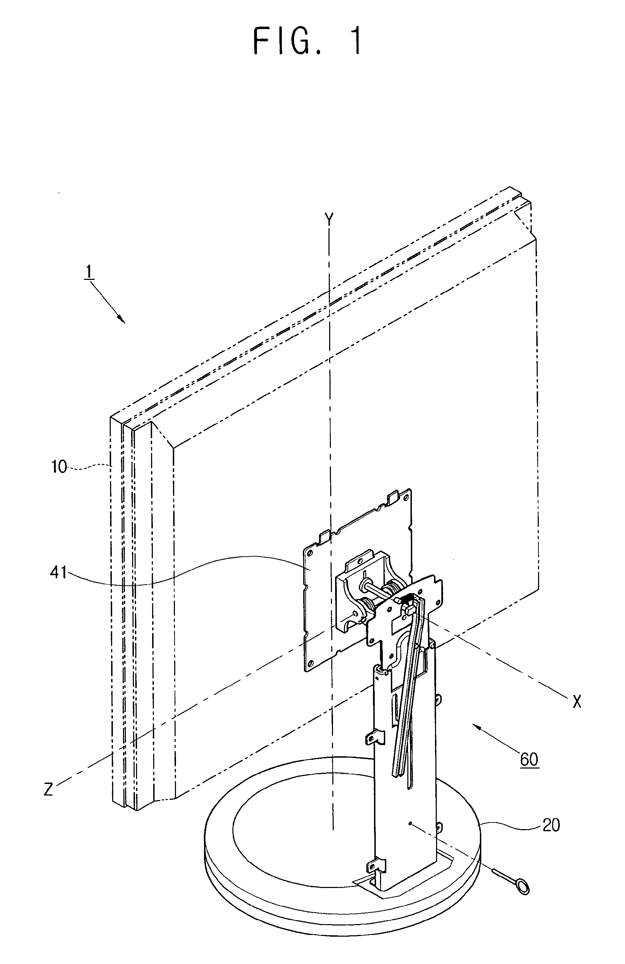

As illustrated in FIGS. 1 through 6, a display apparatus 1 according to an embodiment of the present general inventive concept includes a display main body 10 on which an image is displayed, a base 20 supporting the display main body 10 against an installation surface, and a lifting unit 60 provided between the display main body 10 and the base 20 and allowing the display main body 10 to move up and down relative to the base 20. A pivoting bracket 41 is attached to the display main body 10. Further, the display apparatus 1 can include a tilting unit 30 provided between the display main body 10 and the lifting unit 60 and allowing the display main body 10 to be tilted relative to the base 20. Also, the display apparatus 1 can include a pivoting unit 40 provided between the display main body 10 and the tilting unit 30 and allowing the display main body 10 to be pivoted relative to the base 20. Additionally, the display apparatus 1 can include a swiveling unit 90 coupled to the base 20 and allowing the display main body 10 to be swiveled relative to the installation surface or the base 20. Further, the display apparatus 1 can include a rotation-transmission unit 110 to transmit the pivoting movement of the pivoting unit 40 to the lifting unit 60.

A stand usable in the display apparatus 1 according to an embodiment of the present general inventive concept is constituted of the above described elements. Therefore, the stand will be described below together with the display main body 10 and the base 20 of the display apparatus 1, and thus repetitive descriptions for the stand will be omitted as necessary.

The display main body 10 can be provided as a thin and flat display panel such as an LCD or a PDP to display the image on a front side thereof. However, another image forming device such as a cathode ray tube (CRT) can be also used as the display main body 10. On a rear side of the display main body 10 is provided a plurality of coupling holes (not shown) to be coupled with projections 42a and fastening holes 42b of the pivoting bracket 41 (to be described later) by screws (not shown) or the like. Here, the fastening holes 42b of the pivoting bracket 41 and the coupling holes of the display main body 10 are formed according to video electronic standard association (VESA) standards. Thus, another arm stand (not shown) based on the VESA standards can be mounted to the coupling holes of the display main body 10.

The base 20 is shaped like a plate to be seated on the installation surface such as a table. The base 20 is coupled to a guide frame 61 of the lifting unit 60 and supports the lifting unit 60 and the like. The base 20 includes a base frame 25 coupled to the guide frame 61, and a base cover 21 placed on the base frame 25. The installation surface on which the base 20 is installed includes a flat surface such as the table. However, the installation surface may include an inclined surface such as a wall.

The base frame 25 is shaped like a plate. The base frame 25 may be made of a metal having predetermined strength, but not limited thereto. Alternatively, various materials, such as plastic or the like, can be used for the base frame 25 as long as it has enough strength.

The base cover 21 may be formed by plastic injection molding, but not limited thereto. Alternatively, various materials, such as aluminum or the like, can be used for the base cover 21 as long as it makes outer appearance better. The base cover 21 can be coupled to the base frame 25 by a screw or the like.

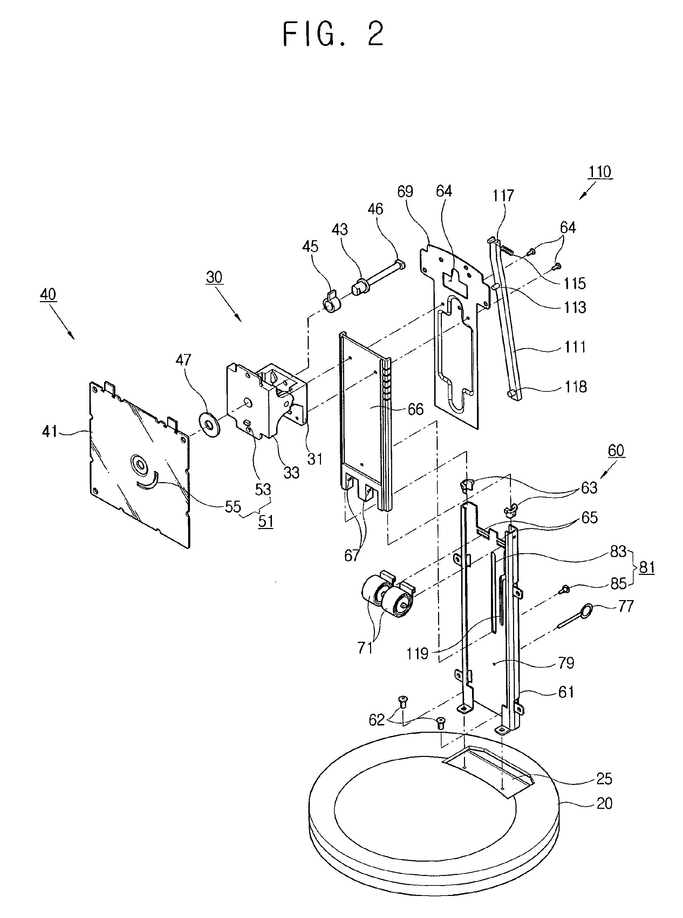

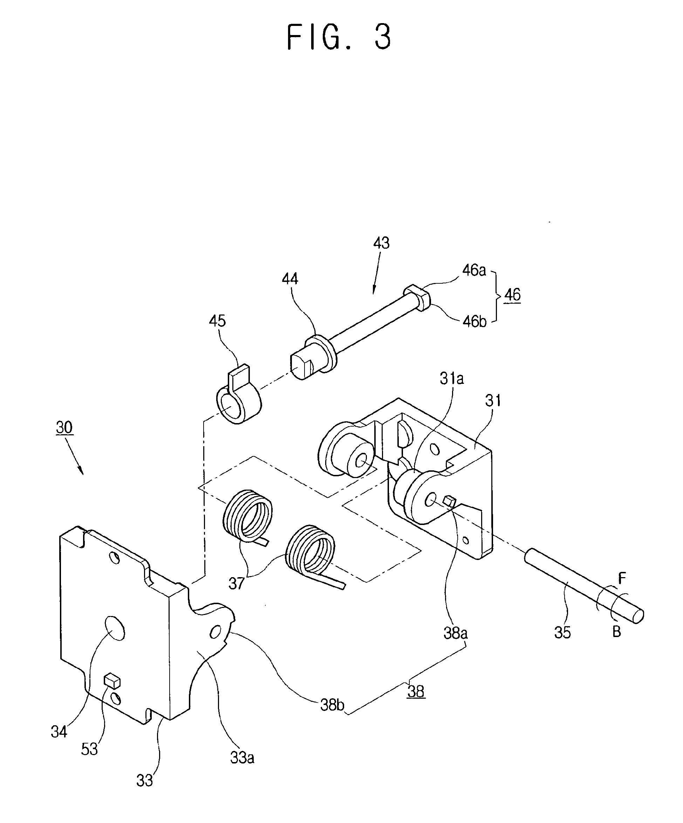

As illustrated in FIGS. 2 and 3, the tilting unit 30 is provided between the lifting unit 60 and the pivoting unit 40, and allows the display main body 10 to be tilted relative to the base 20 with respect to an axial line (refer to a 'Z'-axis of FIG. 1) of a tilting shaft 35 in tilting directions. When a side of the display main body 10 displaying the image is regarded as the front side, the tilting directions is referred to forward and backward directions to have an angle formed between the front side and the base 20. Here, the tilting unit 30 includes a first tilting bracket 31 coupled to the lifting unit 60, a second tilting bracket 33 coupled to the display main body 10, and the tilting shaft 35 coupling the first tilting bracket 31 and the second tilting bracket 33 and allowing the second tilting bracket 33 to be tilted relative to the first tilting bracket 31. Further, the tilting unit 30 can include a spring member 37 coupled to the first and second tilting brackets 31 and 33. Also, the tilting unit 30 can include a tilting limiter 38 provided in the first and second tilting brackets 31 and 33 and limiting tilting of the second tilting bracket 33.

The first tilting bracket 31 has a plate shape, and is coupled to a lifting member 66 of the lifting unit 60, so that the first tilting bracket 31 slidingly moves up and down along with the lifting member 66. The first tilting bracket 31 includes a first tilting shaft coupling part 31a protruding from a surface thereof toward the second tilting bracket 33 and coupled to the tilting shaft 35.

The second tilting bracket 33 is shaped like a plate and has a first pivoting shaft coupling part 34 to be coupled with a pivoting shaft 43 of the pivoting unit 40. The second tilting bracket 33 includes a second tilting shaft coupling part 33a protruding from a surface thereof toward the first tilting bracket 31 and coupled to the tilting shaft 35.

The tilting shaft 35 is inserted in both the first tilting shaft coupling part 31a of the first tilting bracket 31 and the second tilting shaft coupling part 33a of the second tilting bracket 33 through holes formed therein, and allows the second tilting bracket 33 to be tilted relative to the first tilting bracket 31. Here, the tilting shaft 35 can be forcibly fitted into the holes of the first and second tilting shaft coupling parts 31a and 33a to thereby generate friction therebetween while the second tilting bracket 33 is tilted relative to the first tilting bracket 31. The friction may be easily overcome by a user.

The spring member 37 includes a torsion spring having a first end coupled to the first tilting bracket 31 and a second end coupled to the second tilting bracket 33. The torsion spring 37 elastically presses the second tilting bracket 33 and makes the second tilting bracket 33 be pressed forward in a direction of an arrow F relative to the first tilting bracket 31. That is, the torsion spring 37 prevents the second tilting bracket 33 coupled to the display main body 10 from being tilted backward in a direction of an arrow B by the weight of the display main body 30. The torsion spring 37 may have the elasticity enough to prevent the second tilting bracket 33 from tilting backward by a weight of the display main body 30. Thus, a user can easily tilt the display main body 10 forward by the elasticity of the torsion spring substantially without feeling the weight of the display main body 10. Further, a user can tilt the display main body 10 with approximately the same force regardless of forward or backward tilting.

The tilting limiter 38 includes a tilting projection 38a provided in one of the first tilting shaft coupling part 31a of the first tilting bracket 31 and the second tilting shaft coupling part 33a of the second tilting bracket 33, and a tilting projection accommodating part 38b provided in the other one and guiding the tilting projection 38a to rotate the second tilting bracket 33 with respect to the first tilting bracket 31 within a predetermined angle.

The tilting projection 38a protrudes from a surface of the first tilting shaft coupling part 31a in a parallel direction with the tilting shaft 35. The tilting projection accommodating part 38b is formed by cutting off a portion of the second tilting shaft coupling part 33a as much as an arc of the predetermined angle and accommodates the tilting projection 38a therein, so that its tilting is limited by the tilting projection 38a.

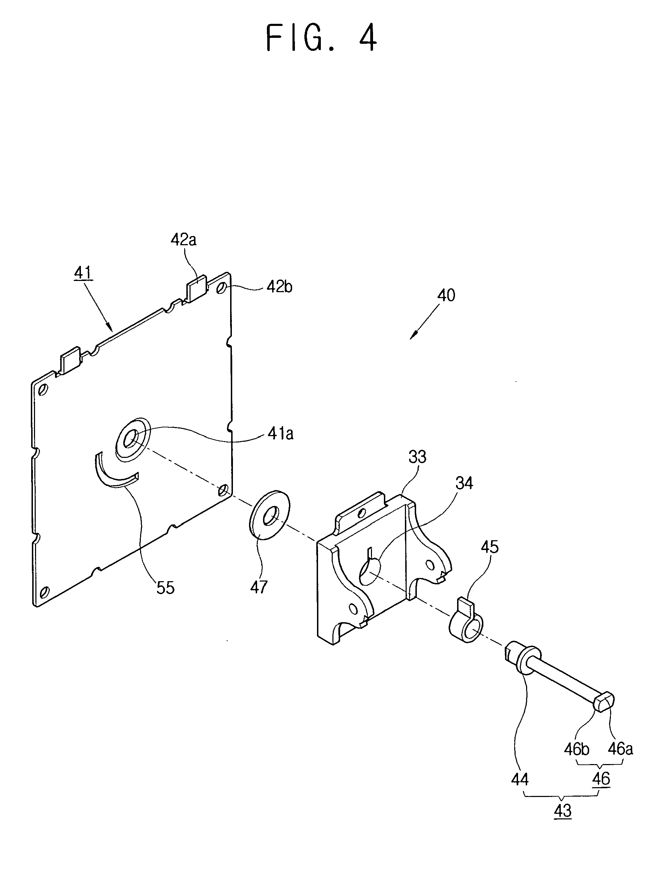

As illustrated in FIGS 2 and 4, the pivoting unit 40 is provided between the display main body 10 and the tilting unit 30 and allows the display main body 10 to be pivoted relative to the base 20 with respect to an axial line (refer to an 'X'-axis of FIG. 1) of the pivoting shaft 34 in pivoting directions. The pivoting direction may be referred to as left and right directions with respect to the x axis. Further, the pivoting unit 40 includes the pivoting shaft 43 coupled to the tilting unit 30, and the pivoting bracket 41 having a first end coupled to the display main body 10 and a second end rotatably coupled to the pivoting shaft 43. The pivoting unit 40 may include a pivoting limiter 51 to limit pivoting the pivoting bracket 41 relative to the tilting unit 30.

The pivoting bracket 41 is shaped like a plate and penetratingly formed with a second pivoting shaft coupling part 41a at a center thereof. The pivoting bracket 41 is provided with the plurality of projections 42a and fastening holes 42b to be coupled with the rear side of the display main body 10.

The projections 42a form a pair and protrude from an upper part of the pivoting bracket 41 in a docking direction of the display main body 10. Thus, the projections 42a are inserted in and coupled to the rear side of the display main body 10. Further, four fastening holes 42b are coupled with the coupling holes (not shown) provided in the rear side of the display main body 10 by the screw (not shown).

The pivoting shaft 43 has a first end that is accommodated in and rotatably coupled to the first pivoting shaft coupling part 34 provided in the second tilting bracket 33, and is coupled to the second pivoting shaft coupling part 41a of the pivoting bracket 41. The pivoting shaft 43 has a pivoting surface 46 at a second end thereof to contact a pivoting contact surface 117 of a lever 111. The pivoting surface 46 may be a noncircular pivoting surface. The pivoting shaft 43 includes a protrusion 44 having a diameter larger than that of a middle region thereof between the first end and the second end. The second end extended from the protrusion has the pivoting surface 46 to be in contact with the pivoting contact surface 117. The first end of the pivoting shaft 43 penetrates the second pivoting shaft coupling part 41a and is then bent toward an outside of the second pivoting shaft coupling part 41a, thereby being coupled to the second pivoting shaft coupling part 41a to be rotated together. That is, a distal end of the first end is fixedly coupled to the pivoting bracket 41 or the rear side of the display main body 10. In addition, the pivoting unit 40 can include at least one washer 47 to be inserted into the pivoting shaft 43 and interposed between the second tilting bracket 33 and the pivoting bracket 41. Between the pivoting shaft 43 and the first pivoting shaft coupling part 34 is provided a pivoting curling 45. The pivoting curling 45 is irrotatably inserted in the first pivoting shaft coupling part 34 and forcibly fitted to the pivoting shaft 43, thereby providing rotational friction between the pivoting shaft 43 and the pivoting curling 45.

The pivoting surface 46 is formed at the second end of the pivoting shaft 43 and has a non-circular shape to contact the pivoting contact surface 117 of the lever 111. In the present embodiment, the pivoting surface 46 includes a rounded circumference 46b and a flat circumference 46a, so that a distance from a center of the pivoting shaft 43 to the circumferences 46a and 46b is not uniform. Alternatively, the pivoting surface 46 may have various shapes as long as its distance from the center of the pivoting shaft 43 varies. The pivoting of the display main body 10 can be transmitted to a guiding projection 118 engaged with a lever moving slot 119 of the guide frame 61 by contact between the pivoting surface 46 and the pivoting contact surface 117. Thus, the pivoting surface 46 may adjust pivoting of the display main body 10.

The washer 47 provides elasticity to generate rotational friction between the second tilting bracket 33 and the pivoting bracket 41 when the pivoting bracket 41 pivots relative to the second tilting bracket 33. The washer 47 may include a disc spring to provide elasticity to the second tilting bracket 33 and the pivoting bracket 41, but not limited thereto. Alternatively, the washer may include another elastic body. Further, the rotational friction due to the washer 47 should be easily overcome by a user when the user pivots the display main body 10.

The pivoting limiter 51 limits a pivoting angle of the pivoting bracket 41 coupled to the display main body 10 relative to the second tilting bracket 33. The pivoting limiter 51 includes a projection stopper 53 protruding from the second tilting bracket 33 to the pivoting bracket 41, and a pivoting slot 55 provided in the pivoting bracket 41 and accommodating the projection stopper 53.

The pivoting slot 55 is formed by cutting off a portion of the pivoting bracket 41 to have an arc shape. The pivoting slot 55 may have the arc shape of 90 degrees with respect to the second pivoting shaft coupling part 41a to thereby allow the display main body 10 to pivot from 0 degree to 90 degrees, but not limited thereto. Alternatively, the pivot slot may have the arc shape to allow the display main body 10 to pivot from 0 degree to 180 degrees. Thus, the display main body 10 can pivot relative to the base 20 within a predetermined angle.

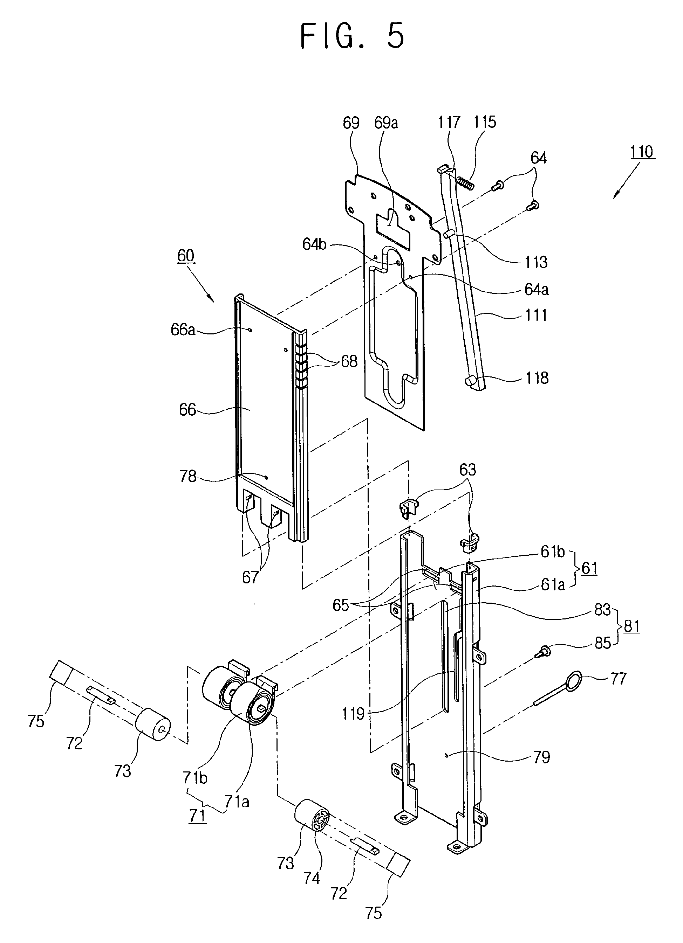

As illustrated in FIGS 2 and 5, the lifting unit 60 is provided between the base 20 and the tilting unit 30 and allows the display main body 10 to slide relative to the base 20 in up and down lifting direction (refer to a 'Y' - axis of FIG. 1). The lifting unit 60 includes the guide frame 61 standing on the base 20, and the lifting member 66 coupled to the display main body 10 and sliding relative to the guide frame 61. Further, the lifting unit 60 includes an oil groove 68 provided in at least one of the guide frame 61 and the lifting member 66 so that the guide frame 61 and the lifting member 66 smoothly slide. Also, the lifting unit 60 includes a guide member 63 provided in the guide frame 61 to guide the lifting member 66 to move therein. Additionally, the lifting unit 60 includes an elastic member 71 provided between the guide frame 61 and the lifting member 66 and pressing the lifting member 66 upward relative to the guide frame 61. Further, the lifting unit 60 includes a stopper 77 coupling the guide frame 61 with the lifting member 66, thereby locking the lifting member 66 to the guide frame 61. Also, the lifting unit 60 includes a lifting limiter 81 to limit a movable distance of the lifting member 66 relative to the guide frame 61.

The guide frame 61 stands on and is coupled to the base frame 25 by a screw 62 (FIG. 2). The guide frame 61 includes a pair of guide parts 61a opposite to each other and having a "⊏"-shape to guide the lifting member 66 at opposite sides, and a plate part 61b connecting the pair of guide parts 61a. The guide frame 61 may be made of metal to have desired strength, but not limited thereto. Alternatively, the guide frame 61 may be made of plastic or the like.

The guide member 63 is coupled to the guide part 61a of the guide frame 61 and guides the lifting member 66 to readily slide. The guide member 63 is inserted in and fastened to the guide part 61a, and is recessed to correspond to a side of the lifting member 66. The guide member 63 can be placed in a top portion of the guide part 61a of the guide frame 61 and may have a length shorter than that of the lifting member 66. However, the guide member 63 may have an approximately equal length to a length of the lifting member 66 so as to support lifting of the lifting member 66.

The lifting member 66 has a plate shape and its lateral sides are coupled to the guide frame 61, thereby sliding relative to the guide frame 61. Meanwhile, the lifting member 66 is coupled with the first tilting bracket 31 at an upper part thereof by a screw 64 through a hole 66a of the lifting member 66 and a hole 64a of a reinforcing member 69, and is provided with a shaft coupling part 67 at a lower part thereof to be coupled with a spring shaft 72. Here, the lifting member 66 and the guide member 63 may be made of a material including plastic. For example, the lifting member 66 and the guide member 63 may be made of a material including resin such as acetal, which has good abrasion resistance and enables smooth sliding therebetween. However, the lifting member 66 and the guide member 63 may be made of another material as long as they smoothly slide each other. Thus, the lifting member 66 can slide up and down as a user applies force thereto. Further, the lifting member 66 can be reinforced with the reinforcing member 69 to increase the strength thereof or to enhance a coupling force with the first tilting bracket 31 or the spring shaft 72. Here, the reinforcing member 69 includes a metal having a required strength and has a plate shape. However, the reinforcing member 69 may be made of a non-metal such as plastic or the like, and may have various shapes such as a bar shape.

The oil groove 68 is formed in a transverse direction to the lifting direction of the lifting member 66 to contact the guide member 63. The oil groove 68 is recessed in the opposite sides of the lifting member 66 and accommodates oil therein. The oil accommodated in the oil groove 68 is supplied between the guide member 63 and the lifting member 66 and used as a lubricant to make the lifting member 66 slide smoothly relative to the guide member 63. A plurality of oil grooves may be provided, but not limited thereto. Alternatively, one oil groove may be provided. Further, the oil groove may be provided in the guide member 63 to contact the lifting member 66 and may be formed in a parallel direction with the lifting direction. Thus, the lifting member 66 slides relative to the guide frame 61. Further, the lifting member 66 is rotatably coupled to a lever rotating shaft 113 of the lever 111 through a hole 64b of the reinforcing member 69, so that the lever 111 can rotate relative to the lifting member 66. Meanwhile, the lifting member 66 includes a coupling projection 115a at one side thereof to be coupled with a lever elastic member 115.

The reinforcing member 69 is interposed between the lifting member 66 and the guide frame 61 and enhances the strength of the lifting member 66 or the coupling force between the lifting member 66 and the first tinting bracket 31 or between the lifting member 66 and the spring shaft 72. The lifting member 69 includes a pivoting shaft passing part 69a formed by penetrating a surface thereof and allowing the second end of the pivoting shaft 43 to contact the pivoting contact surface 117 of the lever 111. Here, the reinforcing member 69 is made of a metal plate having a desired strength, but not limited thereto. Alternatively, the reinforcing member 69 may be made of a non-metal, such as plastic, and may have various shape such as a bar shape instead of the plate shape.

The elastic member 71 includes a spiral spring having a first end 71a coupled to the surface of the guide frame 61 and a second end 71b wound on the spring shaft 72. The elastic member 71 may be formed in a pair, but not limited thereto. Alternatively, one or three elastic members may be provided. Further, the elastic member 71 can include an elastic body such as a coil spring, a leaf spring or rubber. The spiral spring 71 has the first end 71a bent to be coupled to the plate part 61b of the guide frame 61 through holes 65 formed therein, and the second end 71b wound like a roll on the spring shaft 72, and to be fixedly coupled to the spring shaft 72.

The spring shaft 72 is coupled to the shaft coupling part 67 of the lifting member 66 at opposite ends thereof. Additionally, a shaft supporter 73 may be provided between the spring shaft 72 and the spiral spring 71 to rotatably support the spring shaft 72.

The shaft supporter 73 is formed with a shaft accommodating part 74 to rotatably accommodate the spring shaft 72. Between the shaft supporter 73 and the spring shaft 72 is provided a friction member 75 to provide the spring shaft 72 with rotational friction.

The friction member 75 is inserted in the shaft accommodating part 74 of the shaft supporter 73 and elastically contacts the spring shaft 72. The friction member 75 may be provided as a metal leaf spring to generate a rotational friction when the spring shaft 72 rotates relative to the shaft supporter 73. However, the friction member 75 may be made of plastic or rubber. A sum of the rotational friction due to the friction member 75 and the elasticity due to the elastic member 71 is set to prevent the display main body 10 from moving down by its own weight. In other words, the sum of the rotational friction due to the friction members 75 and the elasticity due to the elastic members 71 is similar to the weight of the display main body 10. Thus, a user can easily move the display main body 10 up and down with a similar force regardless of directions in which the display main body 10 moves up or down. Thus, the friction member 75 allows the rotational friction of the spring shaft 72 to be adjustable, so that the same elastic member 71 can be shared in common even if various sizes of the display main body 10 are applied thereto. For example, when the display main body of 17 inches is replaced by that of 19 inches in the same display apparatus 1, the elastic member 71 is not changed and only the friction member 75 is increased in the rotational friction as much as a weight difference between the display main body of 17 inches and that of 19 inches.

The stopper 77 is coupled to both the guide frame 61 and the lifting member 66 and prevents the lifting member 66 from moving relative to the guide frame 61. Here, the stopper 77 is shaped like a thin and long bar, and inserted in a first stopper coupling part 78 formed in the guide frame 61 and a second stopper coupling part 79 formed in the lifting member 66. The stopper 77 may be inserted in a direction from rear side to a front side of the guide frame 61 toward the lift member 66.

The first and second stopper coupling parts 78 and 79 may communicate with each other in a state that the lifting member 66 is placed in a lower part of the guide frame 61. As the stopper 77 penetrates the first and second stopper coupling parts 78 and 79, the lifting member 66 is not moved and maintained relative to the guide frame 61 even though the display main body 10 is separated from the display apparatus 1 while it is carried. Further, when the display apparatus 1 is packaged, its volume can be reduced.

The lifting limiter 81 includes a lifting slot 83 formed in the guide frame 61 along the lifting direction, and a lifting projection 85 having a first end coupled to the lifting member 66 and a second end inserted in the lifting slot 83, so that its movable distance is limited within a length of the lifting slot 83 in the lifting direction.

The lifting slot 83 is formed in the lifting direction on the plate part 61b of the guide frame 61 and has a length corresponding to the lifting distance of the display main body 10. The lifting projection 85 may be a bolt having a threaded end to be screw-coupled with the lifting member 66. However, the lifting slot 83 may be provided in the lifting member 66, and the lifting projection 85 may be provided in the guide frame 61.

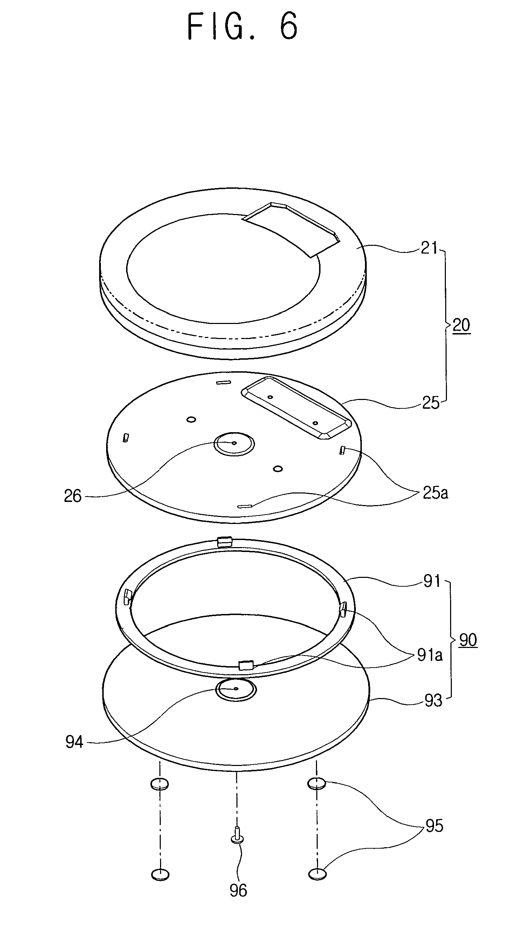

As illustrated in FIG. 6, the swiveling unit 90 is provided under the base 20 and swiveled relative to the base 20 with respect to an axial line (refer to a 'Y'-axis of FIG. 1) in swiveling directions. The swiveling direction may be a rotating direction in which the display main body 10 rotates about the y axis. Here, the swiveling unit 90 includes a swiveling member 91 coupled to a bottom of the base 20, and a swiveling supporter 93 having a first side supported on the installation surface and a second side to contact the swiveling member 91 and to slidably support the swiveling member 91.

The swiveling member 91 is shaped like a ring to be integrally coupled with the base frame 25 of the base 20. The swiveling member 91 has a top side including a hook 91a protruding therefrom and coupled with a hook coupling groove 25a of the base frame 25, and a bottom side protruding like a semicircular section to be in line-contact with the swiveling supporter 93. Thus, the swiveling member 91 slides while being in line-contact with the swiveling supporter 93, so that the display main body 10 can be smoothly swiveled.

The swiveling supporter 93 is shaped like a disc to be seated on the installation surface such as a table. The swiveling supporter 93 is formed with a frame coupling part 94 at a center thereof to be rotatably coupled with the base frame 25. That is, the frame coupling part 94 of the swiveling supporter 93 is rotatably coupled to a supporter coupling part 26 of the base frame 25 by a fastening screw 96. Further, the fastening screw 96 is fastened as long as the swiveling supporter 93 can rotate relative to the base frame 25. Additionally, a contact pad 95 can be provided on the bottom of the swiveling supporter 93 so as to prevent noise and sliding while contacting the installation surface. Thus, the display main body 10 coupled to the base 20 can be smoothly swiveled relative to the swiveling supporter 93.

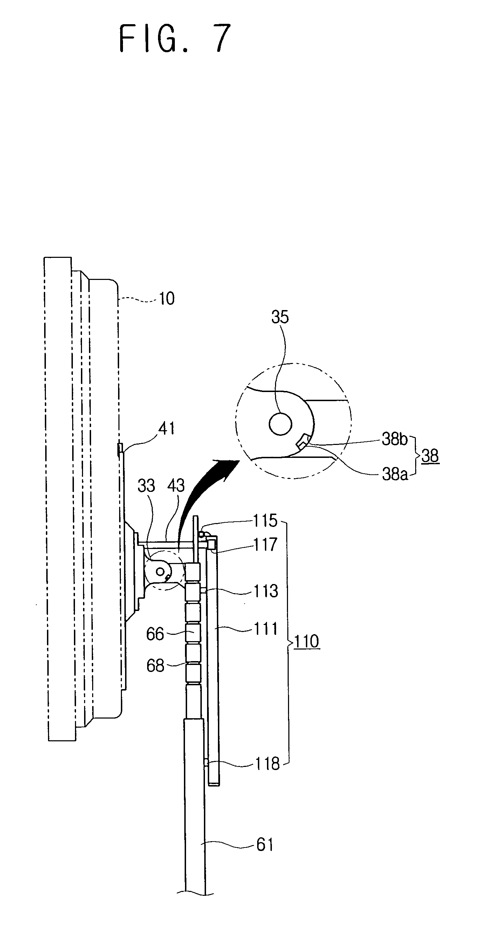

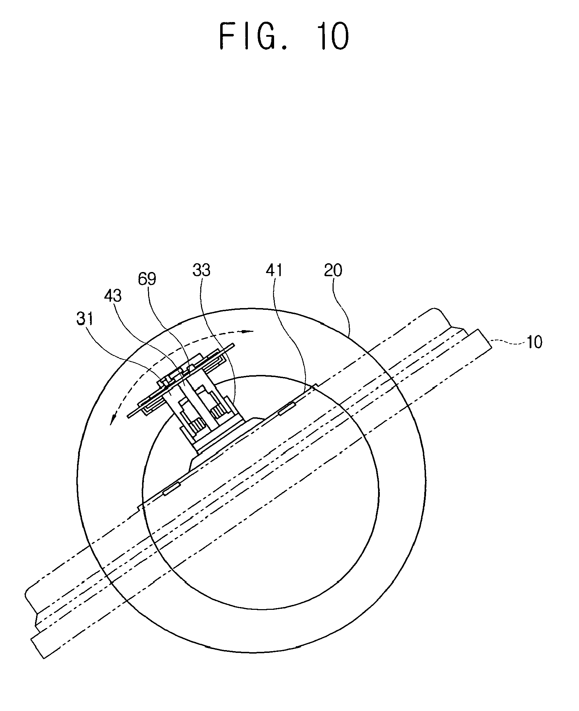

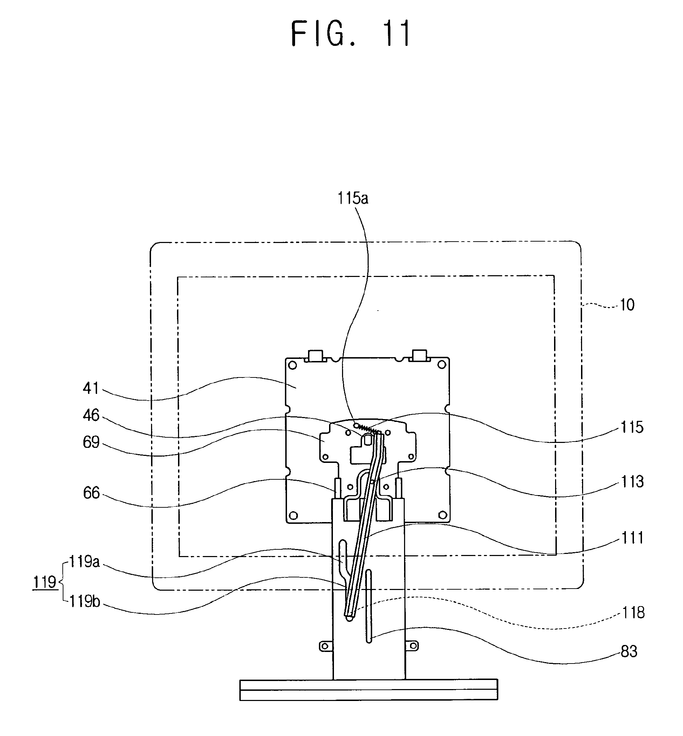

FIGS. 7 through 13 illustrate an operation method of the display apparatus1 of FIG. 1 according to an embodiment of the present general inventive concept. Referring to FIGS 2 and 7, the rotation-transmission unit 110 transmits pivoting from the pivoting unit 40 to the lifting unit 60and includes the lever 111 having a first end to contact the pivoting unit 40 and a second end guided to move up and down by the lifting unit 60. Further, the rotation-transmission unit 110 includes the lever elastic member 115 to elastically press the lever 111 toward the pivoting unit 40 so as to make the lever 111 be in contact with the pivoting unit 40, and the lever moving slot 119 provided in the guide frame 61 and divided into a moving lock region 119a and a moving free region 119b (refer to FIGS. 11-13). Thus, the rotation-transmission unit 110 controls the lifting unit 60 to prevent the display main body 10 from moving down to the moving free region 119b in a state that the pivoting unit 40 is pivoted by a predetermined angle relative to the lifting unit 60. Further, the rotation-transmission unit 110 controls the pivoting unit 40 to be pivoted relative to the lifting unit 60 within a predetermined angle when the display main body 10 is placed at a predetermined distance from the base 20.

The lever 111 includes the lever rotating shaft 113 rotatably coupled to the reinforcing member 69, the pivoting contact surface 117 at one side thereof contacting the pivoting shaft 43 and having an enough size to contact the pivoting surface 46 of the pivoting shaft 43 while the display main body 10 tilts, the coupling projection 115a at one end thereof to which the lever elastic member 115 is coupled, and the guiding projection 118 at the other side thereof protruding from the surface and engaging with the lever moving slot 119. Thus, pivoting of the pivoting unit 40 can be easily transmitted to the lever moving slot 119 of the guide frame 61, so that the display main body 10 is prevented from excessively moving down by an external force and from colliding with the installation surface such as a desk in the state that it is pivoted. Therefore, the display main body 10 is prevented from being damaged.

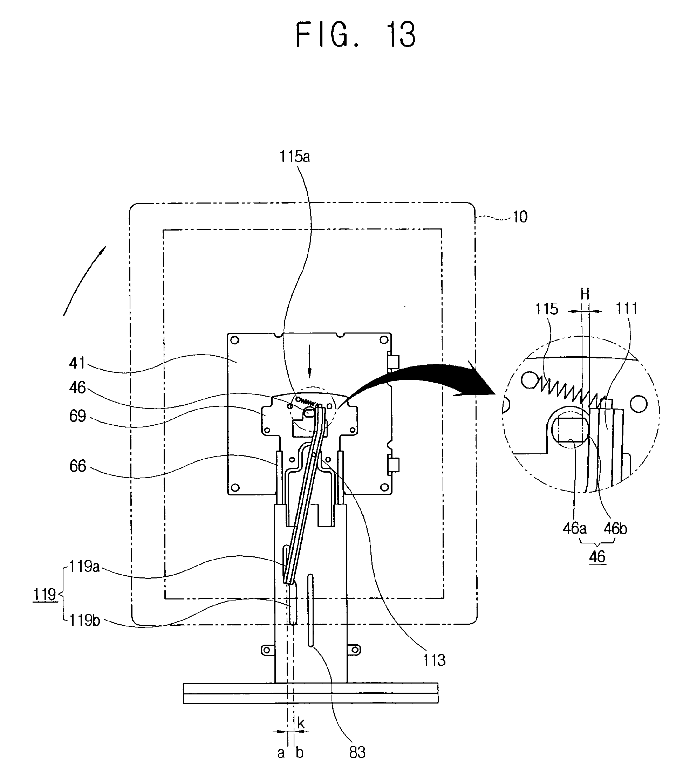

The lever moving slot 119 is formed in the guide frame 61 and engaged with the guiding projection 118, thereby allowing the lever 111 to slide in the lifting direction. Here, the lever moving slot 119 is divided into at least one moving lock region 119a to lock a descending movement of the lifting member 66 in the state that the pivoting unit 40 is pivoted, and the moving free region 119b to communicate with the moving lock region 119a and to form a lifting axial line (refer to 'b' of FIG. 13) spaced apart at a predetermined distance from a lifting axial line (refer to 'a' of FIG. 13) of the moving lock region 119a. In the present embodiment, the lever moving slot 119 is a two-stepped slot having two lifting axial lines "a" and "b", but not limited thereto. Alternatively, the lever lifting slot may be a three or four-stepped slot having three or four lifting axial lines spaced apart from each other. In this case, the pivoting surface 46 can have various shape such that the distance between the pivoting surface 46 of the pivoting unit 40 and the pivoting shaft 43 varies corresponding to the three or four-stepped slot.

Thus, in the state that the pivoting unit 40 is pivoted, the pivoting of the pivoting unit 40 is transmitted the lever 111 to rotate with respect to the lever rotating shaft 113 and to maintain a position of the guiding projection 118 in the lever moving slot 119, so that the lifting member 66 is prevented from moving down. Therefore, the display main body 10 coupled to the lifting member 66 cannot move down any more in the state that it is pivoted, so that the display main body 10 does not collide with the installation surface or the like and is prevented from damage.

With this configuration, operations of the display apparatus according to an embodiment of the present general inventive concept will be described with reference to FIGS. 7 through 13.

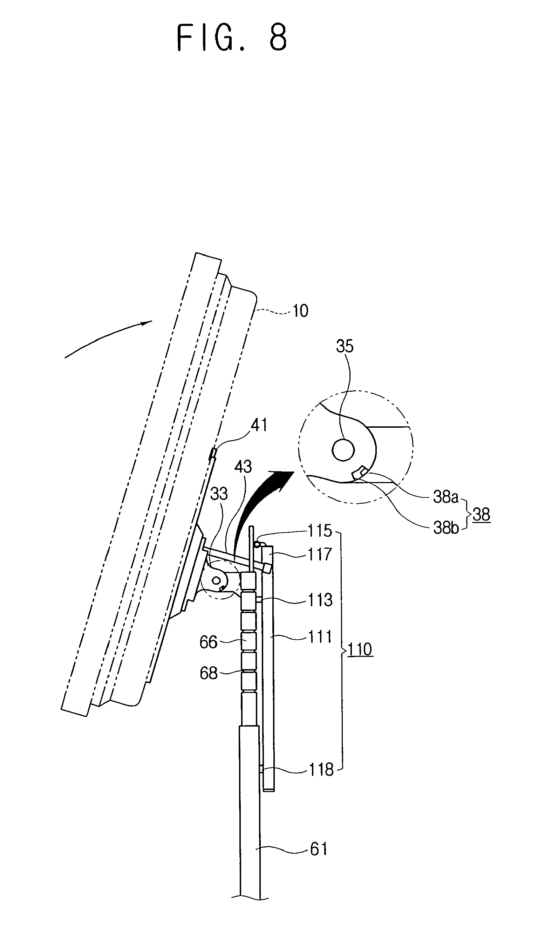

As shown in FIGS. 7 and 8, the display main body 10 tilts relative to the base 20 as follows. First, when a user moves the display main body 10 forward and backward in the tilting directions, the second tilting bracket 33 coupled to the display main body 10 is tilted forward and backward relative to the first tilting bracket 31 with respect to the tilting shaft 35. At this time, the torsion spring 37 makes a user tilt the display main body 10 forward without using an additional force to overcome the weight of the display main body 10. Further, the user can tilt the display main body 10 by a similar force without regard to the forward or backward direction, so that it is convenient for the user. Also, tilting of the display main body 10 is limited within a predetermined angle by the tilting limiter 38. In the meantime, the pivoting contact surface 117 has a surface area large enough to maintain contact between the pivoting contact surface 117 and the pivoting shaft 43 while the tilting unit 30 is tilted.

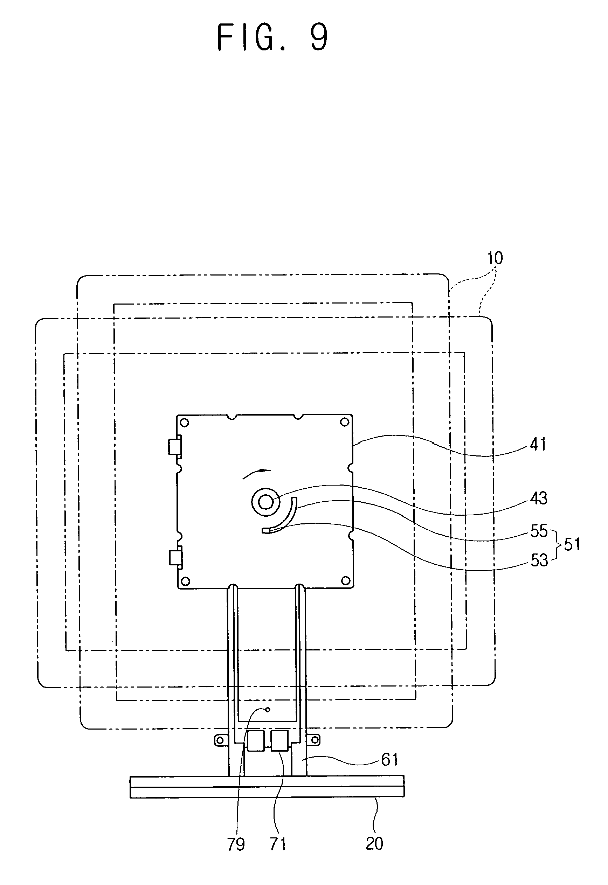

As illustrated in FIG. 9, the display main body 10 pivots relative to the base 20 as follows. First, when a user pivots the display main body 10 with respect to the axial line of the pivoting directions (refer to X-axis of FIG. 1), the pivoting bracket 41 coupled to the display main body 10 is pivoted relative to the second tilting bracket 33 with regard to the pivoting shaft 43. Here, a user needs a force strong enough to overcome the elasticity of the washer 47. Further, the pivoting of the display main body 10 is limited within a predetermined angle by the pivoting limiter 51. At this time, the distance between the pivoting surface 46 and the center of the pivoting shaft 43 according to the pivoting angle of the pivoting shaft 43 is transmitted to the guiding projection 118 of the lever 111 contacting the pivoting shaft 43.

As illustrated in FIGS. 2, 6, and 10, the display main body 10 swivels relative to the installation surface as follows. First, when a user swivels the display main body 10 or the base 20 with respect to the axial line of the swiveling direction (refer to Y-axis of FIG. 1), the swiveling member 91 coupled to the base 20 is swiveled relative to the swiveling supporter 93 seated on the installation surface with respect to the axial line of the up and down lifting direction.

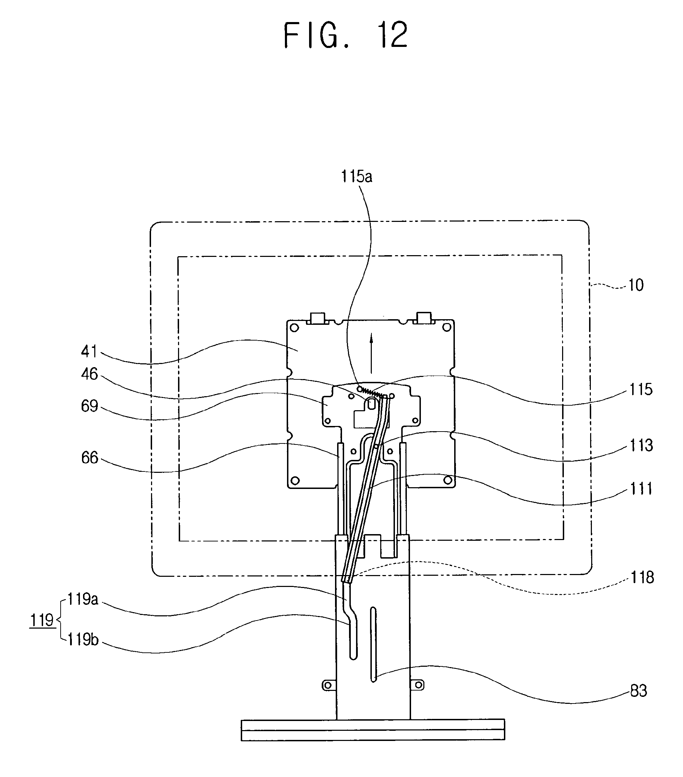

As illustrated in FIGS. 11 through 13, the display main body 10 moves up and down relative to the base 20 as follows. When a user moves up the display main body 10 from the state of FIG. 11 to the state of FIG. 12, the lifting member 66 coupled to the display main body 10 slides relative to the guide frame 61, so that the display main body 10 moves up. At this time, the lever 111 is guided to move to the moving lock region 119a (refer to 'a' of FIG. 13) via the moving free region 119b (refer to 'b' of FIG. 13) spaced apart from the moving lock region 119a by a distance K. Here, the elasticity of the elastic member 71 of the like allows a user to move up the display main body 10 without feeling the weight of the display main body 10. Further, a user can move the display main body 10 by a similar force without regard to the up or down direction.

Then, as illustrated in FIG. 13, when the display main body 10 is pivoted by 90 degree with respect to the pivoting shaft 43, a rounded circumference (46b) of the pivoting surface 46 contacts and presses the lever 111. In this state, when the display main body 10 is moved down, the guiding projection 118 is placed in a lower part of the moving lock region 119a of the lever moving slot 119, so that the display main body 10 cannot move down any more. In other words, as illustrated in a partial enlarged view of FIG. 13, while the pivoting shaft 43 pivots from 0 degree (refer to the dotted line) to 90 degrees (refer to the solid line), the pivoting contact surface 117 of the lever 111 contacting the pivoting surface 46 moves by a predetermined distance (refer to 'H' of FIG. 13). When the pivoting shaft 43 is disposed at 90 degrees, the lever 111 cannot rotate, so that the lifting member 66 is limited to move down to the moving lock region 119a and thus the display main body 10 coupled to the lifting member 66 cannot also move down any more. On the other hand, when the pivoting shaft 43 is disposed at 0 degree, the distance from the center of the pivoting shaft 43 to the pivoting surface 46 becomes shorter, so that a space is formed between the pivoting surface 46 and the pivoting contact surface 117. Thus, the lever 111 can rotate to the moving free region 119b when a user pushes down the lifting member 66, so that the lifting member 66 can move down and the display main body 10 coupled to the lifting member 66 can also move to the bottom of the moving free region 119b. Here, a length of the lever 111, a shape of the pivoting surface 46, a width of the lever moving slot 119, etc., may vary so that the pivoting of the pivoting unit 40 can be controlled in various steps. A length between the pivot contact surface 117 and the lever rotating shaft 113 may be shorter than a length between the lever rotating shaft 113 and the guiding projection 118.

According to an embodiment of the present general inventive concept, the display apparatus includes the lifting unit to allow the display main body to move up and down, and transmits the pivoting operation to the lifting member, so that the display main body can stably move up and down in the pivoting state, thereby preventing the display main body from being damaged. Further, the lifting member of the lifting unit includes the oil groove, so that the lifting operation of the lifting member is more smoothly performed. Also, the friction member is provided in the spring shaft of the elastic member and generates the rotational friction, so that the same elastic member can be shared in common even though a various-sized display main body is mounted in the display apparatus. Additionally, the stopper is provided to easily separate and move the display main body and to decrease its package volume. Further, the tilting unit, the pivoting unit, the swiveling unit, etc., allows the display main body to rotate in various directions relative to the base.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A display apparatus comprising a display main body and a base, further comprising:
a lifting unit provided between the display main body and the base to allow the display main body to move up and down relative to the base;
a pivoting unit provided between the display main body and the lifting unit to allow the display main body to pivot relative to the lifting unit; and
a rotation-transmission unit to transmit a pivoting operation of the pivoting unit to the lifting unit to interlock the pivoting operation of the pivoting unit with a moving operation of the lifting unit.

2. The display apparatus according to claim 1, wherein the rotation-transmission unit controls the lifting unit to limit a moving down operation of the display main body when the pivoting unit pivots at a predetermined angle relative to the lifting unit.

3. The display apparatus according to claim 1, wherein the rotation-transmission unit controls the pivoting unit to pivot within a predetermined limited angle relative to the lifting unit when the display main body is placed at a predetermined distance from the base.

4. The display apparatus according to claim 1, wherein the rotation-transmission unit is coupled to the lifting unit and comprises a lever having a first end contacting the pivoting unit and a second end guided to move up and down by the lifting unit.

5. The display apparatus according to claim 4, wherein the rotation-transmission unit further comprises a lever elastic member to elastically press the lever toward the pivoting unit and maintain contact between the lever and the pivoting unit.

6. The display apparatus according to claim 4, wherein the lifting unit comprises:
a guide frame provided on the base in a lifting direction; and
a lifting member coupled to the pivoting unit to slide relative to the guide frame.

7. The display apparatus according to claim 6, wherein the lever comprises:
a lever rotating shaft rotatably coupled to the guide frame;
a pivoting contact surface provided in a first side of the lever to contact the pivoting unit; and
a guiding projection provided in a second side of the lever and guided to move up and down by the guide frame.

8. The display apparatus according to claim 7, wherein the pivoting unit comprises a pivoting shaft having a non-circular pivoting surface at an end thereof to contact the pivoting contact surface of the lever.

9. The display apparatus according to claim 8, wherein the rotation-transmission unit further comprises a lever moving slot formed in the guide frame to guide the guiding projection to slide in the lifting direction, and divided into at least one moving lock region to lock the moving operation of the lifting unit when the pivoting unit pivots and a moving free region to communicate with the moving lock region and to form a lifting axial line spaced apart at a predetermined distance from a lifting axial line of the moving lock region.

10. The display apparatus according to claim 7, wherein:
the lifting member comprises a reinforcing member coupled to the lifting member to provide a strength to the lifting member; and
the lever rotating shaft is coupled to the reinforcing member.

11. The display apparatus according to claim 6, further comprising:
an oil groove formed in a surface of at least one of the guide frame and the lifting member where the lifting member contacts the guide member.

12. The display apparatus according to claim 6, further comprising:
at least one elastic member provided between the guide frame and the lifting member to elastically press the lifting member upward relative to the guide frame.

13. The display apparatus according to claim 12, wherein:
the elastic member comprises a spiral spring having a first end coupled to a surface of the guide frame and a second end wound on a spring shaft: and
the lifting member comprises a shaft coupling part coupled to the spring shaft.

14. The display apparatus according to claim 13, further comprising:
a shaft supporter provided between the spring shaft and the spiral spring and having a shaft accommodating part to rotatably accommodate and support the spring shaft; and
a friction member provided between the shaft supporter and the spring shaft to generate rotational friction in the spring shaft.

15. The display apparatus according to claim 6, wherein the lifting unit comprises a stopper to couple the guide frame with the lifting member and to maintain a coupling state between the lifting member and the guide frame.

16. The display apparatus according to claim 6, wherein the lifting unit comprises a lifting limiter to limit a movable distance of the lifting member relative to the guide frame, and the lifting limiter comprises a lifting slot formed in the guide frame along the lifting direction and a lifting projection having a first end coupled to the lifting member and a second end inserted in and limited by the lifting slot.

17. The display apparatus according to claim 1, further comprising:
a tilting unit that is provided between the display main body and the lifting unit to allow the display main body to tilt relative to the base, and comprises a first tilting bracket coupled to the lifting unit;
a second tilting bracket coupled to the display main body; and
a tilting shaft provided between the first tilting bracket and the second tilting bracket to allow the second tilting bracket to be tilted relative to the first tilting bracket.

18. The display apparatus according to claim 17, wherein the pivoting unit comprises:
a pivoting shaft coupled to the tilting unit; and
a pivoting bracket having a first end coupled to the display main body and a second end coupled to the pivoting shaft.

19. The display apparatus according to claim 18, wherein the pivoting unit comprises a pivoting limiter to limit pivoting of the pivoting bracket relative to the tilting unit.

20. A stand with a base supporting a display main body of a display main body, on which an image is displayed, relative to an installation surface, the stand comprising:
a lifting unit coupled to the base to move up and down relative the base;
a pivoting unit coupled to the lifting unit to allow the display main body to pivot relative to the lifting unit; and
a rotation-transmission unit to transmit a pivoting operation of the pivoting unit to the lifting unit to interlock the pivoting operation of the pivoting unit with a moving operation of the lifting unit.

21. The stand according to claim 20, wherein the rotation-transmission unit controls the lifting unit to limit a moving down operation of the display main body when the pivoting unit pivots at a predetermined angle relative to the lifting unit.

22. The stand according to claim 20, wherein the rotation-transmission unit controls the pivoting unit to pivot within a predetermined limited angle relative to the lifting unit when the display main body is placed at a predetermined distance from the base.

23. The stand according to claim 20, wherein the rotation-transmission unit is coupled to the lifting unit and comprises a lever having a first end contacting the pivoting unit and a second end guided to move up and down by the lifting unit.

24. The stand according to claim 23, wherein the rotation-transmission unit further comprises a lever elastic member to elastically press the lever toward the pivoting unit and maintain contact between the lever and the pivoting unit.

25. The stand according to claim 24, wherein the lifting unit comprises:
a guide frame provided on the base in a lifting direction; and
a lifting member coupled to the pivoting unit to slide relative to the guide frame.

26. The stand according to claim 25, wherein the lever comprises:
a lever rotating shaft rotatably coupled to the guide frame;
a pivoting contact surface provided in one side of the lever to contact the pivoting unit; and
a guiding projection provided in the other side of the lever and guided to move up and down by the guide frame.

27. The stand according to claim 26, wherein the pivoting unit comprises a pivoting shaft having a non-circular pivoting surface at an end thereof to contact the pivoting contact surface of the lever.

28. The stand according to claim 26, wherein the rotation-transmission unit further comprises a lever moving slot formed in the guide frame to guide the guiding projection to slide in the lifting direction, and divided into at least one moving lock region to lock the moving operation of the lifting unit when the pivoting unit pivots and a moving free region to communicate with the moving lock region and to form a lifting axial line spaced apart at a predetermined distance from a lifting axial line of the moving lock region.

29. The stand according to claim 26, wherein;
the lifting member comprises a reinforcing member coupled to the lifting member to provide a strength to the lifting member; and
the lever rotating shaft is coupled to the reinforcing member.

30. The stand according to claim 25, further comprising:
an oil groove formed in a surface of at least one of the guide frame and the lifting member where the lifting member contacts the guide member.

31. The stand according to claim 25, further comprising:
at least one elastic member provided between the guide frame and the lifting member to elastically press the lifting member upward relative to the guide frame.

32. The stand according to claim 25, wherein;
the lifting unit comprises a stopper to couple the guide frame with the lifting member and to maintain a coupling state between the lifting member and the guide frame.

33. The stand according to claim 25, wherein the lifting unit comprises a lifting limiter to limit a movable distance of the lifting member relative to the guide frame, and the lifting limiter comprises a lifting slot formed in the guide frame along the lifting direction and a lifting projection having a first end coupled to the lifting member and a second end inserted in and limited by the lifting slot.

34. The stand according to claim 20, further comprising:
a tilting unit that is provided between the display main body and the lifting unit to allow the display main body to tilt relative to the base, and comprises a first tilting bracket coupled to the lifting unit;
a second tilting bracket coupled to the display main body; and
a tilting shaft provided between the first tilting bracket and the second tilting bracket to allow the second tilting bracket to be tilted relative to the first tilting bracket.

35. The stand according to claim 34, wherein the pivoting unit comprises:
a pivoting shaft coupled to the tilting unit; and
a pivoting bracket having a first end coupled to the display main body and a second end coupled to the pivoting shaft.

36. A stand usable in a display apparatus, comprising:
a lifting unit having a guide frame coupled to an external base, and a lifting member movably coupled to a pivoting bracket of an external display main body and disposed to move in a lifting direction with respect to the guide frame;
a pivoting unit having a first end coupled to the pivoting bracket of the display main body, and a second end extended from the first end to rotate in a pivoting direction with respect to the lifting unit; and
a rotation-transmission unit having a lever rotatably coupled to the lifting member, the lever having a guiding projection guided by the guide frame such that the lifting member moves in the lifting direction and a pivoting contact surface to be in contact with the second end of the pivoting unit to bias the guiding projection in a lock position in the lifting direction.
